(19)

Europäisches
Patentamt

European
Patent Office

Office européen
des brevets

(11)    **EP 4 600 071 A1**

(12)    **EUROPEAN PATENT APPLICATION**

(43) Date of publication:
**13.08.2025   Bulletin 2025/33**

(21) Application number: **24220842.9**

(22) Date of filing: **18.12.2024**

(51) International Patent Classification (IPC):
**B60L 3/12** (2006.01)       **B60L 7/10** (2006.01)
**B60L 15/20** (2006.01)       **B60W 50/10** (2012.01)
**F16H 59/18** (2006.01)

(52) Cooperative Patent Classification (CPC):
**B60L 3/12; B60K 26/021; B60L 7/10;**
**B60L 15/009; B60L 15/2045; B60W 30/18027;**
**B60W 30/18127; B60W 50/085; B60W 50/10;**
B60K 2026/023; B60L 2240/12; B60L 2240/14;
B60L 2240/16; B60L 2240/421; B60L 2240/423;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **08.02.2024   CN 202410178267**

(71) Applicant: **Nio Technology (Anhui) Co., Ltd**
**Hefei City, Anhui 230611 (CN)**

(72) Inventors:
• **REN, Wenqi**
  **Hefei City, Anhui (CN)**

• **WU, Guoliang**
  **Hefei City, Anhui (CN)**
• **LIU, Ze**
  **Hefei City, Anhui (CN)**
• **XIAO, Bohong**
  **Hefei City, Anhui (CN)**
• **SHI, Liang Salyan**
  **Hefei City, Anhui (CN)**
• **ZHANG, Hongchao**
  **Hefei City, Anhui (CN)**
• **CHEN, Shixing**
  **Hefei City, Anhui (CN)**

(74) Representative: **Vossius & Partner**
**Patentanwälte Rechtsanwälte mbB**
**Siebertstrasse 3**
**81675 München (DE)**

(54)    **METHOD FOR CALCULATING ACCELERATOR PEDAL MAP, COMPUTER-READABLE STORAGE MEDIUM AND COMPUTER DEVICE**

(57)    The present application relates to the technical field of accelerator pedal map calibration, and provides a method for calculating an accelerator pedal map, a computer-readable storage medium and a computer device. The method for calculating an accelerator pedal map comprises the following steps: selecting a plurality of operating points, obtaining a vehicle speed v and an actual pedal position signal corresponding to each operating point, and calculating an actual pedal travel $L_1$ based on the actual pedal position signal; calculating a pedal travel $L_0$ where the operating point is at a steady-state throttle point, and determining a driving torque $T_1$ based on $L_1$, $L_0$ and a current conversion coefficient n between a pedal travel and a motor driving torque; calculating a torque currently required for the vehicle to overcome driving resistance as a resistance torque $T_2$; obtaining a sum of the driving torque $T_1$ and the resistance torque $T_2$ as a target output torque of the vehicle; and storing the actual pedal travel $L_1$, vehicle speed v and target output torque corresponding to each operating point as an accelerator pedal map.

Selecting a plurality of operating points, obtaining a vehicle speed v and an actual pedal position signal corresponding to each operating point, and calculating an actual pedal travel $L_1$ based on the actual pedal position signal
— S100

Calculating a pedal travel $L_0$ where the operating point is at a steady-state throttle point, and determining a driving torque $T_1$ based on $L_1$, $L_0$ and a current conversion coefficient n between a pedal travel and a motor driving torque
— S200

Calculating a torque currently required for the vehicle to overcome driving resistance as a resistance torque $T_2$
— S300

Obtaining a sum of the driving torque $T_1$ and the resistance torque $T_2$ as a target output torque of the vehicle
— S400

Storing the actual pedal travel $L_1$, vehicle speed v and target output torque corresponding to each operating point as an accelerator pedal map
— S500

FIG. 1

**(Cont. next page)**

EP 4 600 071 A1

(52) Cooperative Patent Classification (CPC): (Cont.)
B60L 2240/80; B60L 2250/18; B60L 2250/26;
B60L 2250/28; B60L 2260/26; B60L 2260/42;
B60W 2530/16; B60W 2540/10; B60W 2710/083;
B60Y 2300/188; F16H 59/18; F16H 2059/183

## Description

### TECHNICAL FIELD

The present application relates to the technical field of accelerator pedal map calibration, and in particular to a method for calculating an accelerator pedal map, a computer-readable storage medium and a computer device.

### BACKGROUND

With the development of vehicle electrification and intelligentization, the requirements of new energy vehicles in terms of vehicle drivability and comfort are becoming increasingly higher. This necessitates more complex and refined calibration and optimization of vehicle parameters. Vehicles need to be driven under various operating conditions, and the required driving characteristics are also different, thus making it difficult for a single driving style to cover a variety of use scenarios. Particularly, users can select different driving modes that correspond to different types of driving styles in current electric vehicles to meet personalized needs. For known electric vehicles, a set of pre-calibrated accelerator pedal map alone is commonly used for calculation of a motor output torque.

It is to be noted that the information disclosed in the Background section is only for the purpose of enhancing understanding of the background of the present disclosure, and thus may include information that does not constitute prior art known to a person skilled in the art.

### SUMMARY

One aspect of the present application is to solve the technical problem of how to calculate and set an accelerator pedal map that better satisfies users' personalized driving styles.

In addition, other aspects of the present application are further intended to solve or alleviate other technical problems existing in the prior art.

The present application provides a method for calculating an accelerator pedal map, a computer-readable storage medium and a computer device. Specifically, according to one aspect of the present application, there is provided:

A method for calculating an accelerator pedal map of an electric vehicle, comprising the following steps:

selecting a plurality of operating points, obtaining a vehicle speed v and an actual pedal position signal corresponding to each operating point, and calculating an actual pedal travel $L_1$ based on the actual pedal position signal;

calculating a pedal travel $L_0$ where the operating point is at a steady-state throttle point, and determining a driving torque $T_1$ based on Li, $L_0$ and a current conversion coefficient n between a pedal travel and a motor driving torque;

calculating a torque currently required for the vehicle to overcome driving resistance as a resistance torque $T_2$;

obtaining a sum of the driving torque $T_1$ and the resistance torque $T_2$ as a target output torque of the vehicle; and

storing the actual pedal travel Li, vehicle speed v and target output torque corresponding to each operating point as an accelerator pedal map.

Optionally, according to one embodiment of the present application, the driving torque $T_1$ is determined by the following formula:

$$T_1 = (L_1 - L_0) * n.$$

Optionally, according to one embodiment of the present application, the method further comprises the following steps:

obtaining a motor maximum output torque corresponding to each operating point as a limiting torque, according to an external characteristic curve of a vehicle driving motor, and through the vehicle speed; and

after obtaining a sum of the driving torque $T_1$ and the resistance torque $T_2$, comparing it with the limiting torque $T_3$, and taking the minimum of the two as a target output torque of the vehicle.

Optionally, according to one embodiment of the present application, after the limiting torque is obtained, the method further comprises the following steps:
determining whether a user has customized 0 to 100 km/h acceleration time ti of the vehicle; if so, updating the limiting torque according to the vehicle speed v, 0 to 100 km/h acceleration time ti customized by the user, and 0 to 100 km/h acceleration time $t_0$ in the current driving mode, by the following formula:

$$T_3' = k_1 * t_0 / t_1 * T_3,$$

wherein $T_3'$ denotes an updated limiting torque, and $T_3$ denotes a limiting torque obtained through the vehicle speed before updating, and $k_1$ denotes a first proportional coefficient obtained by a lookup table.

Optionally, according to one embodiment of the present application, after the target output torque of the vehicle is obtained, the method further comprises the following steps:

determining whether the vehicle is in a braking energy recovery mode; if so, obtaining a regenerative braking torque according to the vehicle speed v, the actual pedal travel $L_1$ and the pedal travel $L_0$ at a steady-state throttle point, by the following formula: $T_4=(1-L_1/L_0)*k_2*T_2$, wherein $T_4$ denotes a regenerative braking torque, and $k_2$ denotes a second proportional coefficient obtained by a lookup table; and updating the target output torque as a sum of the obtained target output torque and regenerative braking torque.

Optionally, according to one embodiment of the present application, the resistance torque $T_2$ is determined according to the following sliding resistance formula:

$$T_2=v^2*f_2+v*f_1+f_0,$$

wherein $f_0$ denotes a rolling resistance coefficient of the vehicle, $f_1$ denotes a damping coefficient of a vehicle transmission system, and $f_2$ denotes a drag coefficient of the vehicle.

Optionally, according to one embodiment of the present application, the actual pedal travel $L_1$ is calculated according to the actual pedal position signal by the following formula:

$L_1=L_0*L_p/100$, wherein $L_p$ denotes a total length of pedal travel.

Optionally, according to one embodiment of the present application, a driving mode corresponding to an operating point is further obtained, and the current conversion coefficient n is determined according to the driving mode.

Optionally, according to one embodiment of the present application, the pedal travel $L_0$ at a steady-state throttle point is calculated according to the vehicle speed and the current conversion coefficient n.

Optionally, according to one embodiment of the present application, the limiting torque is obtained through the vehicle speed and the current conversion coefficient n, and according to an external characteristic curve of a vehicle driving motor.

According to another aspect of the present application, the present application provides a computer-readable storage medium having a computer program stored thereon, wherein when the computer program is executed by a processor, the method for calculating an accelerator pedal map is implemented.

According to still another aspect of the present application, the present application provides a computer device comprising a memory, a processor, and a computer program stored on the memory and executable on the processor, wherein when the processor executes the computer program, the method for calculating an accelerator pedal map is implemented.

The benefits of the present application include:

1. The method for calculating an accelerator pedal map in the present application calculates the accelerator pedal map while taking into account a conversion coefficient between a pedal travel and a motor driving torque corresponding to different driving modes. As such, it is possible to calculate the accelerator pedal map matching various driving modes, realize personalized torque control for users, improve driving and riding comfort in various driving modes, and enhance riding experience of users;

2. The method for calculating an accelerator pedal map in the present application performs real-time update of the accelerator pedal map while further taking into account user customized 0 to 100 km/h acceleration time and braking energy recovery, which further realizes control of the motor output torque while identifying a driver's intentions and current driving conditions, thereby better satisfying the switching of driving styles for difference scenarios.

## BRIEF DESCRIPTION OF THE DRAWINGS

The above-mentioned and other features of the present application will become apparent with reference to the drawings. It is easy for a person skilled in the art to understand that: these drawings are for illustrative purposes only, and are not intended to limit the scope of protection of the present application. In addition, similar numerals in the drawings represent similar components. In the drawings,

FIG. 1 shows a schematic flowchart of a method for calculating an accelerator pedal map according to one embodiment of the present application;

FIG. 2 shows the steps taking into account the limiting torque of the motor, in a method for calculating an accelerator pedal map according to one embodiment of the present application.

## DETAILED DESCRIPTION OF EMBODIMENTS

It is readily appreciated that according to the technical solution of the present application, without changing the essential spirit of the present application, a person skilled in the art can propose a variety of interchangeable structural forms and implementation methods. Therefore, the following specific embodiments and drawings are only exemplary descriptions of the technical solution of the present application, and should not be deemed as the entirety of the present application or as a limitation to or restriction on the technical solution of the present application.

It is to be noted that, in the description of the present application, terms such as "upper", "lower", "left", "right", "inside" and "outside" that indicate directions or positional relationships are based on the directions or positional relationships shown in the drawings. These terms are merely for the convenience of description, rather than indicating or implying that the corresponding devices or components would necessarily have a specific orientation, or be constructed and operated in a specific orientation. Thus, these terms should not be construed as limiting the present application. In addition, ordinal terms such as "first", "second" and the like are employed solely for descriptive purposes, and should not be construed as indicating or implying relative importance.

Furthermore, it is to be noted that, in the description of the present application, unless otherwise expressly specified or limited, the terms "mounted", "connected" and the like should be broadly interpreted. For example, these terms may refer to fixed connections, detachable connections or integrated connections; may refer to mechanical connections or electrical connections; may refer to direct connections or indirect connections via intermediate media. A person skilled in the art can understand the specific meanings of these terms in the present application according to specific circumstances.

The accelerator pedal map refers to a relationship diagram illustrating how an output torque of a vehicle powertrain varies with changes in an accelerator pedal travel and a vehicle speed. Typically, the horizontal axis thereof represents a vehicle speed or motor speed, while the vertical axis thereof represents a motor torque or wheel-end torque. The diagram consists of a set of curves corresponding to different pedal travel. The accelerator pedal map reflects the pedal characteristics of the vehicle accelerator, and different pedal characteristics directly determine the basic characteristics such as power, drivability and economy of a vehicle, and also play a vital role in the calibration of the vehicle. In electric vehicles, the vertical axis of an accelerator pedal map represents a motor output torque. Typically, the accelerator pedal map is determined through calibration tests and stored in the vehicle, and is interpolated with the current vehicle speed and pedal travel. Finally, a target motor output torque is obtained from the accelerator pedal map.

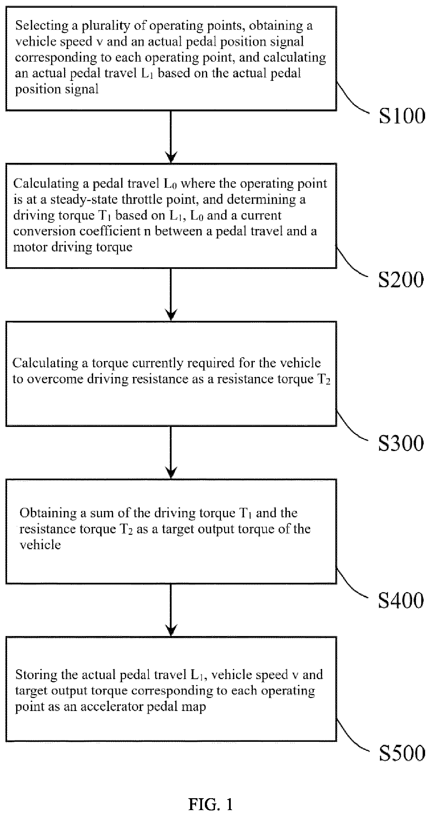

The present application provides a method for calculating an accelerator pedal map for an electric vehicle. With this calculation method, an accelerator pedal map can be provided, which is capable of determining the pedal characteristics while taking into account different driving modes of the vehicle, thereby matching an output torque that is more personalized and improves driving comfort to a user. Referring to FIG. 1, it shows a schematic flowchart of a method for calculating an accelerator pedal map according to one embodiment of the present application, wherein each step of the method is represented by S100-S500 respectively. The method for calculating an accelerator pedal map comprises the following steps:

S100: selecting a plurality of operating points, obtaining a vehicle speed $v$ and an actual pedal position signal corresponding to each operating point, and calculating an actual pedal travel $L_1$ based on the actual pedal position signal;

S200: calculating a pedal travel $L_0$ where the operating point is at a steady-state throttle point, and determining a driving torque $T_1$ based on $L_i$, $L_0$ and a current conversion coefficient $n$ between a pedal travel and a motor driving torque;

S300: calculating a torque currently required for the vehicle to overcome driving resistance as a resistance torque $T_2$;

S400: obtaining a sum of the driving torque $T_1$ and the resistance torque $T_2$ as a target output torque of the vehicle; and

S500: storing the actual pedal travel $L_i$, vehicle speed $v$ and target output torque corresponding to each operating point as an accelerator pedal map.

In this embodiment, a plurality of operating points under different operating conditions are first selected as data points for obtaining basic data. Optionally, discrete operating points can be selected at a fixed vehicle speed interval or according to pedal position signal strength, or a large number of operating points can be selected from different operating conditions at random. The more operating points are selected, the more accurately the finally obtained accelerator pedal map meets the actual needs.

In one embodiment of the present application, the actual pedal travel $L_1$ is calculated according to the actual pedal position signal by the following formula:
$L_1=L_0*L_p/100$, wherein $L_p$ denotes a total length of pedal travel.

The actual pedal position signal data obtained in the vehicle is actually percentage data, which represents the percentage of the degree of opening of an accelerator in digital form. As such, dividing it by 100 and multiplying it by the total length of pedal travel can yield the actual pedal travel.

The "steady-state throttle point" as mentioned before refers to the throttle point where the vehicle maintains a constant motion at the current vehicle speed. In the state of pedal travel at a steady-state throttle point, the vehicle happens to overcome the resistance it counters and moves at a constant speed. Therefore, by simply comparing the pedal travel at a steady-state throttle point and the actual pedal travel of the vehicle, it is possible to know whether the vehicle needs to accelerate or decelerate at present, i.e. whether it is necessary to provide an acceleration torque for accelerating the vehicle or provide a deceleration torque for decelerating the vehicle.

In one embodiment of the present application, a driving mode corresponding to an operating point is further obtained, and the current conversion coefficient n is determined according to the driving mode.

Corresponding to the pedal characteristics of the vehicle, there is a conversion coefficient between a pedal travel of the vehicle and a motor driving torque, which converts the pedal travel of the vehicle into a driving torque to be output through a motor. For a vehicle that does not have multiple driving modes, there is only one conversion coefficient, and a driver cannot change the pedal characteristics, i.e. cannot change the relationship between the pedal travel and the driving torque. However, for a vehicle that has multiple driving modes (for example, including comfort, normal and sports modes), there is a conversion coefficient corresponding to each driving mode, so as to provide a driver with different driving experience in different driving modes. For example, in comfort mode, the conversion coefficient is smaller, requiring the driver to press down on the pedal for further pedal travel to obtain a greater driving torque for acceleration, while in sports mode, the conversion coefficient is larger, allowing the driver to obtain a greater driving torque and acceleration with a light press on the pedal. Therefore, in this embodiment, the current conversion coefficient n is determined in line with the current driving mode of the vehicle, which can take into account different driving modes of the vehicle for matching the pedal travel and outputting the driving torque, thereby realizing personalized adjustment of the driving torque.

In one embodiment of the present application, the pedal travel $L_0$ at a steady-state throttle point is calculated according to the vehicle speed and the current conversion coefficient n. Optionally, a characteristic curve of the vehicle speed, conversion coefficient and pedal travel at a steady-state throttle point is pre-stored in the vehicle, and the pedal travel at a steady-state throttle point is determined based on this characteristic curve, by interpolation with the vehicle speed and the conversion coefficient as inputs.

In one embodiment of the present application, the driving torque $T_1$ is determined by the following formula:

$T_1=(L_1-L_0)*n$, wherein $L_1$ denotes an actual pedal travel, $L_0$ denotes a pedal travel at a steady-state throttle point, and n denotes a current conversion coefficient between a pedal travel and a motor driving torque.

With the above formula, it is possible to determine whether a vehicle needs to accelerate or decelerate, and determine the magnitude of the driving moment the vehicle needs to accelerate or decelerate. Here, the concept of "driving moment" not only includes the moment required for vehicle acceleration, but also includes the moment required for vehicle deceleration. When the vehicle decelerates, it is negative. The product of the difference between the actual pedal travel and the pedal travel at a steady-state throttle point and the current conversion coefficient n reflects the magnitude of an additional torque required for the vehicle to accelerate or decelerate compared to the steady-state throttle point.

In one embodiment of the present application, the resistance torque $T_2$ is determined according to the following sliding resistance formula:

$T_2=v^2*f_2+v*f_1+f_0$, wherein $f_0$ denotes a rolling resistance coefficient of the vehicle, $f_1$ denotes a damping coefficient of a vehicle transmission system, $f_2$ denotes a drag coefficient of the vehicle, and v denotes a vehicle speed.

In this embodiment, the moment of resistance of the vehicle is estimated merely based on the vehicle speed through the sliding resistance formula, and the magnitude thereof is also the magnitude of the resistance torque $T_2$ to be provided to overcome the moment of resistance.

The driving torque $T_1$ is the moment required for acceleration or deceleration at the operating point relative to the steady-state throttle point of the current vehicle speed, while the resistance torque $T_2$ is the torque required for the vehicle to overcome the driving resistance. The sum of the two is the total motor output torque required for the vehicle to meet the current operating condition. Therefore, in this embodiment, the sum of the two is the target output torque.

Finally, a corresponding target output torque is determined for each operating point, and an accelerator pedal map is drawn based on the target output torque corresponding to the vehicle speed and the actual pedal travel of each operating point, and then stored in a vehicle controller. When a driver is actually driving a vehicle, each time he presses down on the pedal, the vehicle speed and pedal signal at that time are collected and input into the accelerator pedal map for interpolation, to obtain the target output torque that corresponds to the accelerator pedal map as the final motor output torque. This process can maximize the degree of personalized matching between the motor output torque and the pedal travel.

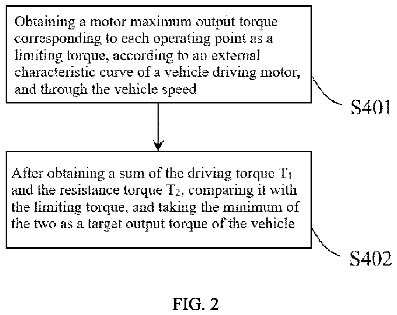

Referring to FIG. 2, it shows the steps taking into account the limiting torque of the motor, in a method for calculating an accelerator pedal map according to one embodiment of the present application, with S401 and S402 referring to these two steps respectively. In the embodiment of FIG. 2, the method for calculating an accelerator pedal map further includes the following steps:

S401: obtaining a motor maximum output torque corresponding to each operating point as a limiting torque, according to an external characteristic curve of a vehicle driving motor, and through the vehicle speed;

S402: after obtaining a sum of the driving torque $T_1$ and the resistance torque $T_2$, comparing it with the limiting torque $T_3$, and taking the minimum of the two as a target output torque of the vehicle.

In this embodiment, in step S400, after a sum of the driving torque and the resistance torque is obtained, it is first limited by the limiting torque, and then used to determine the target output torque. The motor output torque determined according to the external characteristic curve of the driving motor is the motor maximum output torque. Therefore, the target output torque of the motor should not exceed the maximum output torque. After obtaining a sum of the driving torque and the resistance torque, comparing it with the limiting torque, and taking the minimum of the two as a target output torque can prevent the obtained target output torque from exceeding the upper limit of the torque that the motor can output.

In one embodiment of the present application, after the limiting torque is obtained, the method further comprises the following steps:

determining whether a user has customized 0 to 100 km/h acceleration time ti of the vehicle; if so, updating the limiting torque according to the vehicle speed v, 0 to 100 km/h acceleration time ti customized by the user, and 0 to 100 km/h acceleration time $t_0$ in the current driving mode, by the following formula:

$$T_3'=k_1*t_0/t_1*T_3,$$

wherein $T_3'$ denotes an updated limiting torque, and $T_3$ denotes a limiting torque obtained through the vehicle speed before updating, and $k_1$ denotes a first proportional coefficient obtained by a lookup table in calibration tests.

This embodiment is suitable for updating the method for calculating an accelerator pedal map after a user has customized 0 to 100 km/h acceleration time of the vehicle. It can either be performed in step S400 as in the previous embodiment, or be performed after step S500, and updates the accelerator pedal map in real time. It should be understood that different driving modes of the vehicle are typically matched with different 0 to 100 km/h acceleration time. When a user selects a specific driving mode, the 0 to 100 km/h acceleration time of the vehicle is determined. However, in some specific vehicle models, in order to provide users with better personalized experience, after a user selects a driving mode, the user can also customize 0 to 100 km/h acceleration time of the vehicle within a certain range to realize different acceleration experience in this driving mode. After the 0 to 100 km/h acceleration time of the vehicle is changed by the user, the maximum driving torque that the motor needs to output has already been changed. Then, the accelerator pedal map can be adapted, mainly by updating the above-mentioned limiting torque.

In the above formula, the limiting torque obtained merely according to the external characteristic curve of the vehicle is adjusted by the ratio of the 0 to 100 km/h acceleration time $t_0$ in the current driving mode to the 0 to 100 km/h acceleration time ti customized by the user. If the 0 to 100 km/h acceleration time customized by the user is greater than the 0 to 100 km/h acceleration time in the current driving mode, the maximum driving torque that the motor needs to output is smaller, and the limiting torque can be reduced. If the 0 to 100 km/h acceleration time customized by the user is smaller than the 0 to 100 km/h acceleration time in the current driving mode, the maximum driving torque that the motor needs to output is greater, and the limiting torque can be increased. Among them, $k_1$ denotes the ratio of the maximum output torque determined according to the 0 to 100 km/h acceleration time to the limiting torque determined according to the external characteristic curve of the vehicle, which is obtained through calibration tests during the calibration of the vehicle. The characteristic value or characteristic curve thereof is pre-stored in the vehicle, and obtained by a lookup table when necessary.

It should be understood that the setting of the 0 to 100 km/h acceleration time is equivalent to further limiting the output torque of the motor. On the basis of the motor maximum output torque limited by the external characteristic curve of the motor, the target output torque of the motor is further limited according to the motor output torque determined by the 0 to 100 km/h acceleration time, so that the magnitude of the target output torque can not only be matched with the current driving mode, but also can be adjusted according to the user customized acceleration time in this driving mode. This further realizes personalized customization of the output torque by the user and improves the driving comfort.

It should be understood that the steps of the method in this embodiment not only can be performed during the stage of calibration of the vehicle to determine the accelerator pedal map, but also can be performed in real time when a driver is actually driving the vehicle, i.e. the accelerator pedal map is updated in real time when it is detected that the driver has customized the 0 to 100 km/h acceleration time.

In one embodiment of the present application, after the target output torque of the vehicle is obtained, the method further comprises the following steps:

determining whether the vehicle is in a braking energy recovery mode; if so, obtaining a regenerative braking torque according to the vehicle speed v, the actual pedal travel $L_1$ and the pedal travel $L_0$ at a steady-state throttle point, by the following formula: $T_4=(1-L_1/L_0)*k_2*T_2$, wherein $T_4$ denotes a regenerative braking torque, and $k_2$ denotes a second proportional coefficient obtained by a lookup table in calibration tests; and

updating the target output torque as a sum of the obtained target output torque and regenerative braking torque.

In this embodiment, the method for calculating an accelerator pedal map is updated in consideration of whether the vehicle is in the braking energy recovery mode. First, it is necessary to determine whether the vehicle is in the braking energy recovery mode. It should be understood that for known electric vehicles, the vehicle may also be in the braking energy recovery mode when not braking, for example, when the vehicle is gliding at a constant speed. Therefore, what needs to be determined fundamentally is whether the motor is recovering energy. If the vehicle accelerates, it can be assumed that the vehicle is not in the braking energy recovery mode, and then the regenerative braking torque is 0, so there is no need to consider the impact of the regenerative braking torque on the accelerator pedal map.

After ensuring that the vehicle is in the braking energy recovery mode, it is necessary to calculate the magnitude of the regenerative braking torque, and update the regenerative braking torque to, in particular add it to, the previous target output torque. This part of the regenerative braking torque is actually used for braking energy recovery of the motor, that is, for charging the battery. In the above formula, the relationship between the braking torque and the resistance torque is determined by the ratio of the difference between the pedal travel $L_0$ at a steady-state throttle point and the actual pedal travel $L_1$ to the pedal travel $L_0$ at a steady-state throttle point, and the coefficient $k_2$ determines the proportional coefficient of the regenerative braking torque relative to the total braking torque. It should be understood that in known electric vehicles, in most circumstances, not all braking torque is used for braking energy recovery. Rather, only a portion of the braking torque is used for braking energy recovery. Therefore, $k_2$ is usually less than or equal to 1. $k_2$ is generally determined by calibration tests during the calibration of the vehicle, and the corresponding characteristic value or characteristic curve is pre-stored in the vehicle. When the specific value of $k_2$ for a certain operating condition is required, it can be obtained, for example, by a lookup table through interpolation.

It should be understood that the steps of the method in this embodiment not only can be performed during the stage of calibration of the vehicle to determine the accelerator pedal map, but also can be performed in real time when a driver is actually driving the vehicle and it is detected that the vehicle is in the braking energy recovery mode, i.e. the accelerator pedal map is updated in real time when it is detected that the function of braking energy recovery is initiated.

A second aspect of the present application provides a computer-readable storage medium having a computer program stored thereon, wherein when the computer program is executed by a processor, the method for calculating an accelerator pedal map is implemented.

It can be understood that the computer-readable storage medium has all technical effects of the aforementioned method for determining an accelerator pedal map, which will not be repeated here.

A third aspect of the present application provides a computer device comprising a memory and a processor, wherein the memory is suitable for storing multiple program codes, and the program codes are suitable for being loaded and run by the processor to execute the aforementioned method for calculating an accelerator pedal map.

It can be understood that the computer device has all technical effects of the aforementioned method for determining an accelerator pedal map, which will not be repeated here. The computer device may include a control device formed by various electronic devices.

It can be understood by a person skilled in the art that implementing all or part of the processes in the method for calculating an accelerator pedal map in the present application can be completed by instructing relevant hardware through a computer program, and the computer program can be stored in a computer-readable storage medium. When the computer program is executed by the processor, the steps of each of the above-mentioned method embodiments can be implemented. Among them, the computer program includes computer program codes, and it can be understood that the program codes include but are not limited to the program codes for executing the above method for calculating an accelerator pedal map. For the convenience of description, only the parts related to the present application are shown. The computer program codes can be in the forms of source codes, object codes, executable files or some intermediate forms. The computer-readable storage medium may include: any entity or device, medium, USB flash drive, mobile hard disk, floppy disk, optical disk, computer memory, read-only memory, random access memory, electric carrier signal, telecommunication signal and software distribution medium, etc. that can carry the computer program codes. It is to be noted that the content contained in the computer-readable storage medium can be increased or decreased as appropriate according to the requirements of legislation and patent practice within a jurisdiction. For example, in some jurisdictions, according to legislation and patent practice, the computer-readable storage medium does not include an electric carrier signal and a telecommunication signal.

It should be understood that all the preferred embodiments mentioned above are exemplary rather than restrictive, and various modifications or variations made by a person skilled in the art to the specific embodiments described above, within the conception of the present application, should all fall within the legal protection scope of the present application.

The relevant user personal information that may be involved in various embodiments of the present application all belongs to personal information actively provided by users during the use of products/services or generated through the use of products/services, and obtained with user authorization, strictly in accordance with the requirements of laws and regulations, following the principles of legality, legitimacy and necessity, and based on reasonable purposes within business scenarios.

The user personal information handled by the applicant may vary depending on the specific product/service scenario, and shall be based on the specific scenario in which the user uses the product/service, which may involve the user's account information, device information, driving information, vehicle information or other related information. The applicant will treat the user personal information and process it with a high degree of diligence.

The applicant attaches great importance to the security of user personal information, and has adopted reasonable and feasible security protection measures in compliance with industry standards to protect user information, and prevent personal information from being accessed without authorization, disclosed, used, modified, damaged or lost.

## Claims

1.  A method for calculating an accelerator pedal map of an electric vehicle, wherein the method comprises the following steps:

    selecting a plurality of operating points, obtaining a vehicle speed v and an actual pedal position signal corresponding to each operating point, and calculating an actual pedal travel $L_1$ based on the actual pedal position signal;
    calculating a pedal travel $L_0$ where the operating point is at a steady-state throttle point, and determining a driving torque $T_1$ based on Li, $L_0$ and a current conversion coefficient n between a pedal travel and a motor driving torque;
    calculating a torque currently required for the vehicle to overcome driving resistance as a resistance torque $T_2$;
    obtaining a sum of the driving torque $T_1$ and the resistance torque $T_2$ as a target output torque of the vehicle; and
    storing the actual pedal travel Li, vehicle speed v and target output torque corresponding to each operating point as an accelerator pedal map.

2.  The method for calculating an accelerator pedal map according to claim 1, wherein the driving torque $T_1$ is determined by the following formula:

    $$T_1=(L_1-L_0)*n.$$

3.  The method for calculating an accelerator pedal map according to claim 1 or 2, wherein the method further comprises the following steps:

    obtaining a motor maximum output torque corresponding to each operating point as a limiting torque, according to an external characteristic curve of a vehicle driving motor, and through the vehicle speed; and
after obtaining a sum of the driving torque $T_1$ and the resistance torque $T_2$, comparing it with the limiting torque, and taking the minimum of the two as a target output torque of the vehicle.

4.  The method for calculating an accelerator pedal map according to claim 3, wherein after the limiting torque is obtained, the method further comprises the following steps:

    determining whether a user has customized 0 to 100 km/h acceleration time ti of the vehicle; if so, updating the limiting torque according to the vehicle speed v, 0 to 100 km/h acceleration time ti customized by the user, and 0 to 100 km/h acceleration time $t_0$ in the current driving mode, by the following formula:

    $$T_3'=k_1*t_0/t_1*T_3,$$

    wherein $T_3'$ denotes an updated limiting torque, and $T_3$ denotes a limiting torque obtained through the vehicle speed before updating, and $k_1$ denotes a first proportional coefficient obtained by a lookup table.

5.  The method for calculating an accelerator pedal map according to any one of claims 1 to 4, wherein after the target output torque of the vehicle is obtained, the method further comprises the following steps:
    determining whether the vehicle is in a braking energy recovery mode; if so, obtaining a regenerative braking torque according to the vehicle speed v, the actual pedal travel $L_1$ and the pedal travel $L_0$ at a steady-state throttle point, by the following formula:

    $T_4=(1-L_1/L_0)*k_2*T_2$, wherein $T_4$ denotes a regenerative braking torque, and $k_2$ denotes a second proportional coefficient obtained by a lookup table; and
    updating the target output torque as a sum of the obtained target output torque and regenerative braking torque.

6.  The method for calculating an accelerator pedal map according to any one of claims 1 to 5, wherein the resistance torque $T_2$ is determined according to the following sliding resistance formula:

    $$T_2=v^2*f_2+v*f_1+f_0,$$

    wherein $f_0$ denotes a rolling resistance coefficient of the vehicle, $f_1$ denotes a damping coefficient of a vehicle transmission system, and $f_2$ denotes a drag coefficient of the vehicle.

7. The method for calculating an accelerator pedal map according to any one of claims 1 to 6, wherein the actual pedal travel $L_1$ is calculated according to the actual pedal position signal by the following formula:

$L_1=L_0*L_p/100$, wherein $L_p$ denotes a total length of pedal travel.

8. The method for calculating an accelerator pedal map according to any one of claims 1 to 7, wherein a driving mode corresponding to an operating point is further obtained, and the current conversion coefficient n is determined according to the driving mode.

9. The method for calculating an accelerator pedal map according to any one of claims 1 to 8, wherein the pedal travel $L_0$ at a steady-state throttle point is calculated according to the vehicle speed and the current conversion coefficient n.

10. The method for calculating an accelerator pedal map according to any one of claims 1 to 3, wherein the limiting torque is obtained through the vehicle speed and the current conversion coefficient n, and according to an external characteristic curve of a vehicle driving motor.

11. A computer-readable storage medium having a computer program stored thereon, wherein when the computer program is executed by a processor, the method for calculating an accelerator pedal map according to any one of claims 1 to 10 is implemented.

12. A computer device comprising a memory, a processor, and a computer program stored on the memory and executable on the processor, wherein when the processor executes the computer program, the method for calculating an accelerator pedal map according to any one of claims 1 to 10 is implemented.

Selecting a plurality of operating points, obtaining a vehicle speed v and an actual pedal position signal corresponding to each operating point, and calculating an actual pedal travel $L_1$ based on the actual pedal position signal

S100

Calculating a pedal travel $L_0$ where the operating point is at a steady-state throttle point, and determining a driving torque $T_1$ based on $L_1$, $L_0$ and a current conversion coefficient n between a pedal travel and a motor driving torque

S200

Calculating a torque currently required for the vehicle to overcome driving resistance as a resistance torque $T_2$

S300

Obtaining a sum of the driving torque $T_1$ and the resistance torque $T_2$ as a target output torque of the vehicle

S400

Storing the actual pedal travel $L_1$, vehicle speed v and target output torque corresponding to each operating point as an accelerator pedal map

S500

FIG. 1

Obtaining a motor maximum output torque
corresponding to each operating point as a
limiting torque, according to an external
characteristic curve of a vehicle driving motor,
and through the vehicle speed

S401

After obtaining a sum of the driving torque $T_1$
and the resistance torque $T_2$, comparing it with
the limiting torque, and taking the minimum of
the two as a target output torque of the vehicle

S402

FIG. 2

## EUROPEAN SEARCH REPORT

**Application Number**

EP 24 22 0842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 409 450 B (DONGFENG HANGSHENG WUHAN AUTOMOBILE CONTROL SYSTEM CO LTD) 15 March 2022 (2022-03-15) | 1-3,6,7, 9-12 | INV. B60L3/12 B60L7/10 |
| A | * paragraphs [0006] - [0019], [0037] - [0052]; figure 3 * | 4,5,8 | B60L15/20 B60W50/10 F16H59/18 |
| | ----- | | |
| X | CN 117 131 594 A (DONGFENG MOTOR GROUP CO LTD) 28 November 2023 (2023-11-28) | 1,2,4,5, 7-12 | |
| A | * paragraphs [0077] - [0163] * | 3,6 | |
| | ----- | | |
| A | CN 111 231 697 A (KAIBO YIKONG VEHICLE TECH SUZHOU CO LTD) 5 June 2020 (2020-06-05) * paragraphs [0004] - [0008], [0025] * | 1-12 | |
| | ----- | | |

**TECHNICAL FIELDS SEARCHED (IPC)**

B60L
B60W
B60K
F16H

The present search report has been drawn up for all claims

| Place of search | Date of completion of the search | Examiner |
|---|---|---|
| The Hague | 20 June 2025 | Morlando Cerveró, I |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

2

## ANNEX TO THE EUROPEAN SEARCH REPORT
## ON EUROPEAN PATENT APPLICATION NO.

EP 24 22 0842

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | | Publication date | Patent family member(s) | Publication date |
|---|---|---|---|---|
| CN 111409450 | B | 15-03-2022 | NONE | |
| CN 117131594 | A | 28-11-2023 | NONE | |
| CN 111231697 | A | 05-06-2020 | NONE | |

EPO FORM P0459

For more details about this annex : see Official Journal of the European Patent Office, No. 12/82